Europäisches Patentamt

European Patent Office

Office européen des brevets

(11) Veröffentlichungsnummer: **0 254 823**
**B1**

(12) **EUROPÄISCHE PATENTSCHRIFT**

(45) Veröffentlichungstag der Patentschrift: **25.04.90**

(51) Int. Cl.⁵: **G 01 B 11/02, G 01 D 5/38**

(21) Anmeldenummer: **87106621.3**

(22) Anmeldetag: **07.05.87**

(54) Lichtelektrische Positionsmesseinrichtung.

(30) Priorität: **26.07.86 DE 3625327**

(43) Veröffentlichungstag der Anmeldung:
**03.02.88 Patentblatt 88/05**

(45) Bekanntmachung des Hinweises auf die
Patenterteilung:
**25.04.90 Patentblatt 90/17**

(84) Benannte Vertragsstaaten:
**AT CH DE ES FR GB IT LI NL SE**

(56) Entgegenhaltungen:
**EP-A-0 065 429**
**EP-A-0 126 686**
**DE-A-3 536 497**
**FR-A-2 210 762**
**GB-A-2 043 240**
**US-A-4 445 780**

(73) Patentinhaber: **DR. JOHANNES HEIDENHAIN GMBH**
**Fraunhofer Strasse 2-4 Postfach 1260**
**D-8225 Traunreut (DE)**

(72) Erfinder: **Parriaux, Olivier, Dr.**
**Place de Palud 1**
**CH-1003 Lausanne (CH)**
Erfinder: **Cochet, Francois, Dr.**
**Rue du Roc 10**
**CH-2000 Neuchâtel (CH)**

Courier Press, Leamington Spa, England.

**Beschreibung**

Die Erfindung bezieht sich auf eine lichtelektrische Positionsmeßeinrichtung gemäß dem Oberbegriff des Anspruchs 1.

In der DE—A—33 16 144 und der JP—A—59—164 914 werden derartige Geräte beschrieben. Bei derartigen Geräten stellt ein Beugungsgitter das Bezugsmaß dar. Ein Beugungsgitter besteht aus sehr dünnen Gitterlinien, die dicht nebeneinander liegend zum Beispiel auf einer Glas- oder Metallplatte durch mechanische Bearbeitung, durch ein optisches Lithographieverfahren oder durch Elektronenstrahllithographie ausgebildet sind. Ferner sind bei derartigen Geräten vorgesehen: eine Lichtquelle, die monochromatisches Licht aussendet, beispielsweise Laserlicht, zwei Reflektorspiegel und ein auf der der Lichtquelle gegenüberliegenden Seite des Beugungsgitters befindlicher Detektor, der Interferenzlicht empfängt. Der von der Lichtquelle ausgesendete Lichtstrahl wird von dem Beugungsgitter gebeugt und hindurchgelassen. Wenn man annimmt, daß das Beugungsgitter bezüglich einem anderen Teil des optischen Systems, beispielsweise bezüglich der Lichtquelle und den Reflektorspiegeln relativ bewegt wird, so ändert sich das Interferenzlicht über zwei Perioden, wenn sich das Beugungsgitter über eine Periode bewegt.

Bei einer weiteren bekannten Anordnung wird der von der Lichtquelle ausgesendete Lichtstrahl von dem Beugungsgitter gebeugt, und Lichtbündel derselben Ordnung mit unterschiedlichen Vorzeichen überlappen sich und interferieren miteinander, indem z. B. ein halbdurchlässiger Spiegel vorgesehen wird, bevor das Licht in den Detektor eintritt. Nimmt man also wieder an, daß das Beugungsgitter und ein anderer Teil des optischen Systems relativ zueinander bewegt werden, wie es bereits oben erläutert wurde, so ändert sich das Interferenzlicht über zwei Perioden, während sich das Beugungsgitter über eine Periode bewegt.

Es ist problematisch, die beschriebenen optischen Anordnungen auf kleinem Raum unterzubringen. Das optische System wird leicht sehr umfangreich, so daß relativ viel Platz zur Verfügung stehen muß.

Der Erfindung liegt die Aufgabe zugrunde, den oben aufgezeigten Nachteil zu vermeiden, und eine Positionsmeßeinrichtung zu schaffen, die besonders einfach im Aufbau ist und bei der Störungen durch Umgebungseinflüsse weitgehend ausgeschaltet sind, so daß sich eine zuverlässige Arbeitsweise ergibt.

Diese Aufgabe wird durch eine Einrichtung mit den Merkmalen des Anspruches 1 gelöst.

Die besonderen Vorteile des Gegenstandes der Erfindung sind die kompakte Bauweise, die Integrationsfähigkeit und die Störsicherheit gegenüber Umgebungseinflüssen.

Anhand der Zeichnungen soll mit Hilfe von Ausführungsbeispielen die Erfindung noch näher erläutert werden.

Es zeigt.
Figur 1 eine Durchlicht-Meßeinrichtung;
Figur 2 eine Auflicht-Meßeinrichtung;
Figur 3 ein Einkoppelgitter in integrierter Optik;
Figur 4 ein Koppler.

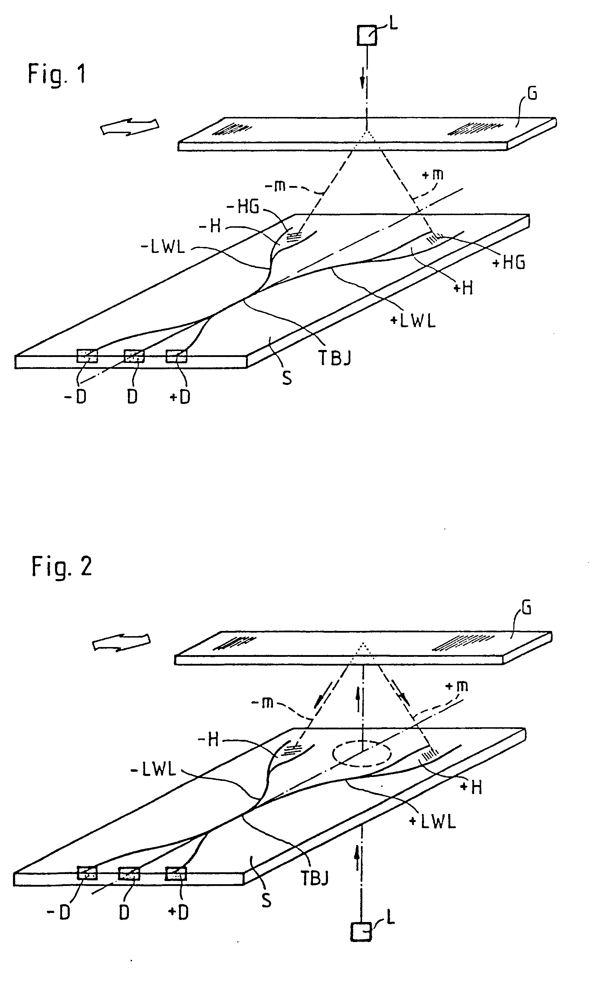

Eine in Figur 1 dargestellte Durchlicht-Meßeinrichtung weist als Strahlungsquelle einen Halbleiterlaser L auf. Quer zu dessen Strahlrichtung ist ein Beugungsgitter G verschiebbar angeordnet. Der Halbleiterlaser L ist beispielsweise am Bett einer nicht dargestellten Werkzeugmaschine angeordnet. Das Beugungsgitter G ist beispielsweise am ebenfalls nicht dargestellten Schlitten dieser Werkzeugmaschine angeordnet. Die Relativbewegung zwischen Bett und Schlitten soll als Maschinenbewegung gemessen werden. Dabei entspricht diese Relativbewegung der Relativverschiebung zwischen Halbleiterlaser L und Beugungsgitter G.

Die Strahlung des Halbleiterlasers L wird am Beugungsgitter G gebeugt und es entstehen Teilstrahlenbündel +m und −m von gleicher Ordnung, aber entgegengesetztem Vorzeichen.

Die Teilstrahlenbündel +m und −m fallen auf ein Substrat S, das ebenfalls mit dem nicht gezeigten Maschinenbett fest verbunden ist. Auf dem Substrat S befinden sich zwei Einkoppelelemente +H und −H, zwei Lichtwellenleiter +LWL und −LWL, ein Koppler TBJ sowie drei Detektoren +D, D, −D. Im vorliegenden Ausführungsbeispiel sind diese Elemente in Form einer integriert optischen Schaltung auf dem Substrat S zusammengefaßt.

Figur 2 zeigt eine weitgehend identische Anordnung, wie sie in Figur 1 dargestellt ist, jedoch befindet sich der Halbleiterlaser L auf der gleichen Seite vom Beugungsgitter G, wie das Substrat S. Man spricht in diesem Fall von einer Auflicht-Meßeinrichtung. Da die gezeigten Bauelemente denen in Figur 1 entsprechen, werden die gleichen Bezugszeichen verwendet.

Die genannten Bauelemente können auch in Form von Faseroptiken ausgebildet werden, was allerdings zu keiner anderen schematischen Darstellung geführt hätte. Deshalb ist auf eine gesonderte Darstellung der entsprechenden Faseroptiken verzichtet worden.

Die Teilstrahlenbündel +m und −m treffen auf die Einkoppelelemente, die als Einkoppelgitter +HG und −HG in Form von Hörnern +H und −H ausgebildet sind. Die Hörner können als eine Art von ebenen Trichtern betrachtet werden, mit denen großflächig Lichtstrahlen eingekoppelt werden können, die dann mit Hilfe von Verengungen gebündelt werden. Aus der EP—B1—0 006 052 ist es prinzipiell bekannt, mit Hilfe von Einkoppelgittern Licht in Wellenleiter von integrierten optischen Schaltungen einzuleiten.

Um das Licht entsprechend zu fokussieren sind unterschiedliche Möglichkeiten vorhanden. Aus herstellungstechnischen und demgemäß auch aus Kostengründen werden beim Anmeldungsgegenstand sogenannte Hörner verwendet, da sie einfach konstruiert und hergestellt werden kön-

2

nen. Ihr optischer Wirkungsgrad ist zudem ausreichend. Die Form der Hörner +H und −H ist im weitesten Sinne parabolisch und errechnet sich nach den optischen und geometrischen Gegebenheiten wie der Lage des Einkoppelgitters +HG bzw. −HG innerhalb des jeweiligen Hornes +H bzw. −H, seiner Beugungsstruktur, der Richtung und der Wellenlänge des einfallenden kollimierten Lichtes u.s.w..

Die Konfiguration der Hörner +H und −H wird der Fachmann also gemäß den Anforderungen bestimmen und ohne weiteres ausführen können.

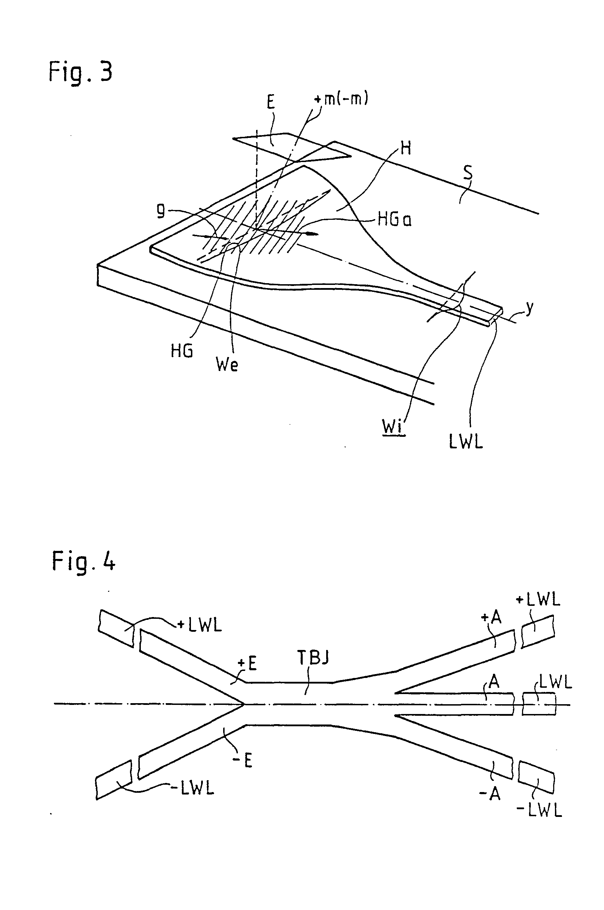

In Figur 3 ist ein Horn H schematisch auf einem Substrat S dargestellt. Erkennbar ist auch, daß die Engstelle in einen Lichtwellenleiter LWL einmündet, der ebenfalls in integrierter Optik ausgeführt ist. Zu dem Einkoppelgitter HG ist zu sagen, daß seine Achse HGa zu der Achse Y des Hornes H einen bestimmten Winkel einnimmt, der seinerseits wieder von den vorgenannten optischen und geometrischen Bedingungen abhängt. Am Einkoppelgitter HG sind noch die Ebene E der Wellenfront der beiden Teilstrahlenbündel +m(−m), die Achse HGa des Einkoppelgitters HG, die Teilung g des Einkoppelgitters HG und die Ausbreitungsfronten We und Wi der Lichtwelle in einer Ebene des Hornes H und des Lichtwellenleiters LWL schematisch dargestellt.

Figur 4 zeigt schematisch einen sogenannten 2 x 3 Koppler, der auch als "three-branch junction" bezeichnet wird. Die Theorie derartiger Koppler — dort allerdings eines 3 x 2 Kopplers — ist in einem Aufsatz von William K. Burns und A. Fenner Milton beschrieben: "3 x 2 Channel Waveguide Gyroscope Couplers: Theroy" IEEE Journal of Quantum Electronics, Vol. QE—18, No. 10, Oct. 1982.

Durch die Lichtwellenleiter +LWL und −LWL werden die eingekoppelten Teilstrahlenbündel +m und −m in Eingänge +E und −E des Kopplers TBJ eingespeist und dort zur Interferenz gebracht. Der Koppler TBJ kann so ausgelegt werden, daß an seinen drei Ausgängen +A, A, −A zueinander phasenverschobene Signale anstehen. Die Signale können zueinander jeweils um 120° phasenverschoben sein, es können aber auch an zwei Ausgängen +A und −A Signale anstehen, die eine Sinus- bzw. Cosinus-Funktion repräsentieren, wobei am dritten Ausgang A ein Referenzsignal ansteht. Die Signale an den Ausgängen +A, A, −A werden wiederum mittels Lichtwellenleitern LWL (s. Figur 1 und 2) zu Detektoren +D, D, −D geleitet, von denen sie in elektrische Signale umgewandelt und einer elektronischen Auswerteschaltung zugeführt werden.

Die Verschiebebewegungen des Beugungsgitters G werden so zu im allgemeinen digital angezeigten positionsmeßwerten für die zu messenden Maschinenbewegungen umgeformt.

**Patentansprüche**

1. Lichtelektrische Positionsmeßeinrichtung zur Messung der Realtivlage zweier Objekte mit einer Licht aussenden Strahlungsquelle (L) und wenigstens einem quer zur Strahlrichtung der vorgenannten Strahlungsquelle verschiebbaren Beugungsgitter (G) zum Erzeugen von mindestens zwei gebeugten Teilstrahlenbündeln (+m, −m), die mittels optischer Elemente (+H, −H, +LWL, −LWL) zur Interferenz gebracht werden, wobei die interferierenden Teilstrahlenbündel von Detektoren (+D, D, −D) in zueinander phasenverschobene elektrische Signale umgewandelt werden, dadurch gekennzeichnet, daß in wenigstens zwei Lichtwellenleiter (+LWL, −LWL) zwei Teilstrahlenbündel (+m, −m) mittels zwei Einkoppelelementen (+H, −H) eingekoppelt werden, zwei Eingängen (+E, −E) eines Kopplers (TBJ) zugeführt und im Koppler (TBJ) zur Interferenz gebracht werden, so daß an Ausgängen (+A, A, −A) des Kopplers (TBJ) zueinander phasenverschobene Signale detektierbar sind.

2. Lichtelektrische Positionsmeßeinrichtung nach Anspruch 1, dadurch gekennzeichnet, daß der Koppler (TBJ) zwei Eingänge (+E, −E) und drei Ausgänge (+A, A, −A) aufweist, und daß bei Einspeisung von zwei Teilstrahlenbündeln (+m, −m) in die zwei Eingänge (+E, −E) des Kopplers (TBJ) an wenigstens zweien der drei Ausgänge (+A, A, −A) zwei zueinander phasenverschobene Signale anstehen.

3. Lichtelektrische Positionsmeßeinrichtung nach Anspruch 2, dadurch gekennzeichnet, daß an zwei Ausgängen (+A, −A) des Kopplers (TBJ) zwei Ausgangssignale anstehen, die eine Sinus- bzw. Cosinus-Funktion repräsentieren und daß am dritten Ausgang (A) ein Referenzsignal ansteht.

4. Lichtelektrische Positionsmeßeinrichtung nach Anspruch 2, dadurch gekennzeichnet, daß an den drei Ausgängen (+A, A, −A) drei um jeweils 120° zueinander phasenverschobene Ausgangssignale anstehen.

5. Lichtelektrische Positionsmeßeinrichtung nach Anspruch 1, dadurch gekennzeichnet, daß die Einkoppelelemente jeweils als Einkoppelgitter (+HG, −HG) in Form eines parabolischen Hornes (+H, −H) ausgebildet sind.

6. Lichtelektrische Positionsmeßeinrichtung nach Anspruch 1, dadurch gekennzeichnet, daß die parabolischen Hörner (+H, −H), die Lichtwel-Denleiter (LWL) und der Koppler (TBJ) in Form einer integrierten optischen Schaltung auf einem Substrat (S) zusammengefaßt sind.

7. Lichtelektrische Positionsmeßeinrichtung nach Anspruch 6, dadurch gekennzeichnet, daß die integrierte optische Schaltung auch die Detektoren (+D, D, −D) beinhaltet.

8. Lichtelektrische Positionsmeßeinrichtung nach Anspruch 1, dadurch gekennzeichnet, daß die Einkoppelelemente (+H, −H), die Lichtwellenleiter (LWL) und der Koppler (TBJ) in Faseroptik ausgebildet sind.

9. Lichtelektrische Positionsmeßeinrichtung nach Anspruch 1, dadurch gekennzeichnet, daß die Strahlungsquelle als Laser (L) ausgebildet ist.

**Revendications**

1. Dispositif photoélectrique de mesure de position pour la mesure de la position relative de deux objets, comportant une source de rayonnement (L) émettant une lumière et au moins une grille de diffraction (G) susceptible d'être déplacée transversalement à la direction du rayon de la source de rayonnement précitée, en vue de produire au moins deux faisceaux partiels de rayons diffractés (+m, −m), qui sont amenés à interférer au moyen d'éléments optiques (+H, −H, +LWL, −LWL), les faisceaux partiels de rayon interférants étant convertis par des détecteurs (+D, D, −D) en signaux électriques déphasés, caractérisé en ce qu'au moins dans deux guides d'ondes lumineuses (+LWL, −LWL), deux faisceaux partiels de rayon (+m, −m) sont introduits à l'aide d'éléments de couplage (+H, −H), sont amenés à deux entrées (+E, −E) d'un coupleur (TBJ) et sont amenés à interférer dans le coupleur (TBJ), de manière que des signaux déphasés puissent être détectés aux sorties (+A, A, −A) du coupleur (TBJ).

2. Dispositif photoélectrique de mesure de position selon la revendication 1, caractérisé en ce que le coupleur (TBJ) présente deux entrées (+E, −E) et trois soties (+A, A, −A), et en ce que lors de l'introduction de deux faisceaux partiels de rayons (+m, −m) dans les deux entrées (+E, −E) du coupleur (TBJ), deux signaux déphasés apparaissent à au moins deux des trois sorties (+A, A, −A).

3. Dispositif photoélectrique de mesure de position selon la revendication 2, caractérisé en ce qu'à deux sorties (+A, −A) du coupleur (TBJ), apparaissent deux signaux de sortie représentant respectivement une fonction sinus et une fonction cosinus et qu'à la troisième sortie (A) il apparaît un signal de référence.

4. Dispositif photoélectrique de mesure de position selon la revendication 2, caractérisé en ce que trois signaux de sortie déphasés respectivement de 120° apparaissent aux trois sorties (+A, A, −A).

5. Dispositif photoélectrique de mesure de position selon la revendication 1, caractérisé en ce que les éléments de couplage sont chacun réalisés sous la forme d'une grille de couplage (+HG, −HG) ayant la forme d'une corne parabolique (+H, −H).

6. Dispositif photoélectrique de mesure de position selon la revendication 1, caractérisé en ce que les cornes paraboliques (+H, −H), les guides d'ondes lumineuses (LWL) et le coupleur (TBJ) sont groupés sur un substrat (S), sous la forme d'un circuit optique intégré.

7. Dispositif photoélectrique de mesure de position selon la revendication 6, caractérisé en ce que le circuit optique intégré contient également les détecteurs (+D, D, −D).

8. Dispositif photoélectrique de mesure de position selon la revendication 1, caractérisé en ce que les éléments de couplage (+H, −H), les guides d'ondes lumineuses (LWL) et le coupleur (TBJ) sont réalisés en optique à fibres.

9. Dispositif photoélectrique de mesure de position selon la revendication 1, caractérisé en ce que la source de rayonnement est un laser (L).

**Claims**

1. Photoelectric position measuring device for measuring the relative position of two objects with a light-emitting source of radiation (L) and at least one diffraction grating (6) displaceable transverse to the ray direction of the said source of radiation for generating at least two diffracted component rays (+m, −m), which are brought into interference by means of optical elements (+H, −H, +LWL, −LWL), wherein the interfering component rays are converted into electrical signals phase-displaced from one another by detectors (+D, D, −D), characterized in that two component rays (+m, −m) are coupled into at least two light wave guides (+LWL, −LWL) by means of two coupling-in elements (+H, −H), are applied to two inputs (+E, −E) of a coupler (TBJ) and are brought into interference in the coupler (TBJ) so that signals phase-displaced relative to one another are detectable at outputs (+A, A, −A) of the coupler (TBJ).

2. Photoelectric position measuring device according to claim 1, characterized in that the coupler (TBJ) has two inputs (+E, −E) and three outputs (+A, A, −A) and in that, on feeding two component rays (+m, −m) into the two inputs (+E, −E) of the coupler (TBJ), two signals phase-displaced relative to each other appear at at least two of the three outputs (+A, −A).

3. Photoelectric position measuring device according to claim 2. characterized in that two output signals appear at two outputs (+A, −A) of the coupler (TBJ). which represent a sine or cosine function respectively, and in that a reference signal appears at the third output (A).

4. Photoelectric position measuring device according to ciaim 2, characterized in that three output signais phase-displaced at 120° to each other appear at the three outputs (+A, A, −A).

5. Photoelectric position measuring device according to claim 1, characterized in that the coupling-in elements are each formed as a coupling-in grating (+HG, −HG) in the form of a parabolic horn (+H, −H).

6. Photoelectric position measuring device according to claim 1, characterized in that the parabolic horns (+H, −H), the light wave guides (LWL) and the coupler (TBJ) are assembled in the form of an integrated optical circuit on a substrate.

7. Photoelectric position measuring device according to claim 6, characterized in that the integrated optical circuit also includes the detectors (+D, D, −D).

8. Photoelectric position measuring device according to claim 1, characterized in that the coupling-in elements (+H, −H), the light wave guides (LWL) and the coupler (TBJ) are formed by fibre optics.

9. Photoelectric position measuring device according to claim 1, characterized in that the source of radiation (L) is formed as a laser (L).

Fig. 1

Fig. 2

1

Fig. 3

Fig. 4